(19) Europäisches Patentamt
European Patent Office
Office européen des brevets

(11) **EP 1 018 828 A2**

(12) **EUROPEAN PATENT APPLICATION**

(43) Date of publication:
**12.07.2000 Bulletin 2000/28**

(51) Int. Cl.[7]: **H04L 27/26**

(21) Application number: **99125963.1**

(22) Date of filing: **27.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.01.1999 JP 11599**

(71) Applicant: **NEC CORPORATION Tokyo (JP)**

(72) Inventor: **Watanabe, Shinji Minato-ku, Tokyo (JP)**

(74) Representative:
**Baronetzky, Klaus, Dipl.-Ing. et al Splanemann Reitzner Baronetzky Westendorp Patentanwälte Rumfordstrasse 7 80469 München (DE)**

(54) **Guard interval correlator and correlation method therefor for OFDM signals**

(57) A guard interval correlator suitable for the calculation of a guard interval correlation and a correlation producing method therefore are disclosed. A first delay delays an input value by the length of a guard interval while a subtractor subtracts a correlation delayed by one clock from a delayed output. An adder adds the input value and the delayed output. Further, a second delay delays the resulting sum by one clock to thereby output a correlation. This is successful to prevent the circuitry from being scaled up without degrading the accuracy of the correlation.

*Fig. 3*

EP 1 018 828 A2

**Description**

BACKGROUND OF THE INVENTION

The present invention relates to a guard interval correlator suitable for the calculation of a guard interval correlation, and a correlation producing method therefore.

An OFDM (Orthogonal Frequency Division Multiplexing) system belongs to a family of systems available for transmitting, e.g., coded digital video signals by use of a limited frequency band. The OFDM system sends digital information subjected to QAM (256 Quadrature Amplitude Modulation) or similar multilevel modulation by using a number of carrier waves. The OFDM system includes a guard interval correlator or synchronizing circuit for calculating a guard interval correlation.

A conventional guard interval correlator has the following problems left unsolved. Assume that a guard interval has a length N. Then, to calculate *n* newest cumulative values (correlation values) by real-time operation, N accumulators are necessary. The number of required accumulators increases with an increase in the guard interval length N, scaling up the circuitry. Should the frequency of accumulation be reduced in order to scale down the circuitry, the calculation or correlation would lack in accuracy.

Technologies relating to the present invention are disclosed in, e.g., Japanese Patent Laid-Open Publication Nos. 8-228189, 10-135924, 10-145324 and 10-294711.

SUMMARY OF THE INVENTION

It is therefore an object of the present invention to provide a guard interval correlator practicable with a minimum of circuit scale without lowering correlation accuracy, and a correlation producing method therefor.

In accordance with the present invention, a guard interval correlator includes a first delay for delaying an input value by the length of a guard interval. A subtractor performs subtraction with the output of the first delay and a correlation output delayed by one clock. An adder adds the input value and the output of the subtractor. A second delays the output of the adder by one clock to thereby output the correlation output, and feeds the correlation output to the subtractor.

Also, in accordance with the present invention, a method of producing a guard interval correlation includes the steps of delaying an input value by the length of a guard interval to thereby produce a delayed output, executing subtraction with the delayed output and a correlation output delayed by one clock to thereby produce a difference, adding the input value and the difference to thereby produce a sum, and delaying the sum by one clock to thereby produce the correlation output and feeding the correlation output to the subtraction step.

BRIEF DESCRIPTION OF THE DRAWINGS

The above and other objects, features and advantages of the present invention will become more apparent from the following detailed description taken with the accompanying drawings in which:

FIG. 1 is a block diagram schematically showing a conventional guard interval correlator;
FIG. 2 is a timing chart demonstrating the operation of the conventional guard interval correlator;
FIG. 3 is a schematic block diagram showing a guard interval correlator embodying the present invention;
FIG. 4 is a timing chart showing a specific operation of the illustrative embodiment; and
FIG. 5 is a schematic block diagram showing an alternative embodiment of the present invention.

DESCRIPTION OF THE PREFERRED EMBODIMENTS

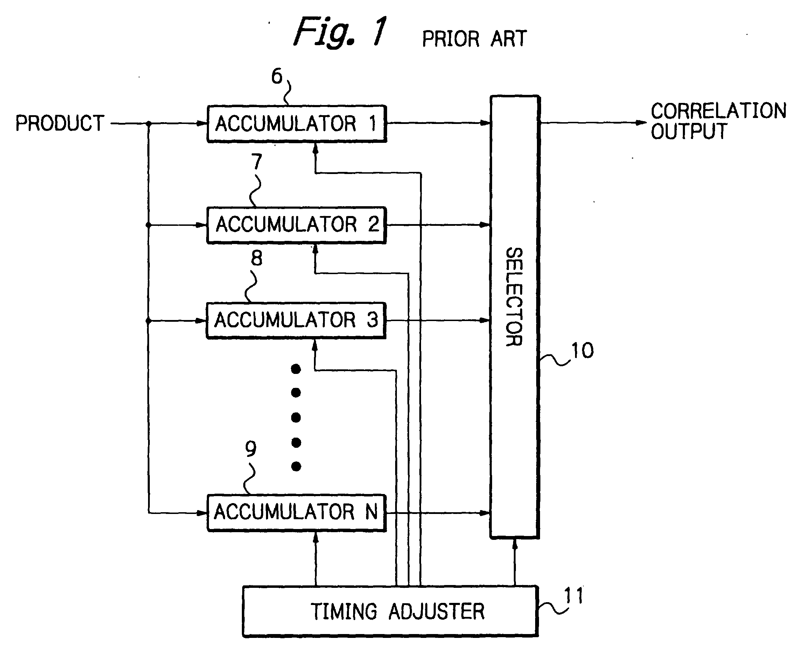

To better understand the present invention, brief reference will be made to a conventional guard interval correlator, shown in FIG. 1. As shown, the guard interval correlator includes accumulators 6 through 9, a selector 10, and a timing adjuster 11. The accumulators 6 through 9 each accumulate one to N data (products). The selector 10 selects one of the outputs of the accumulators 6 through 9 at a time and outputs it. The timing adjuster 11 generates timing signals for resetting the accumulators 6 through 9 and a timing signal for switching the selector 10. Specifically, the timing adjuster 11 sequentially shifts the accumulating operations of the accumulators 6 through 9 by one clock and shifts the selecting operation of the selector 10 by one clock.

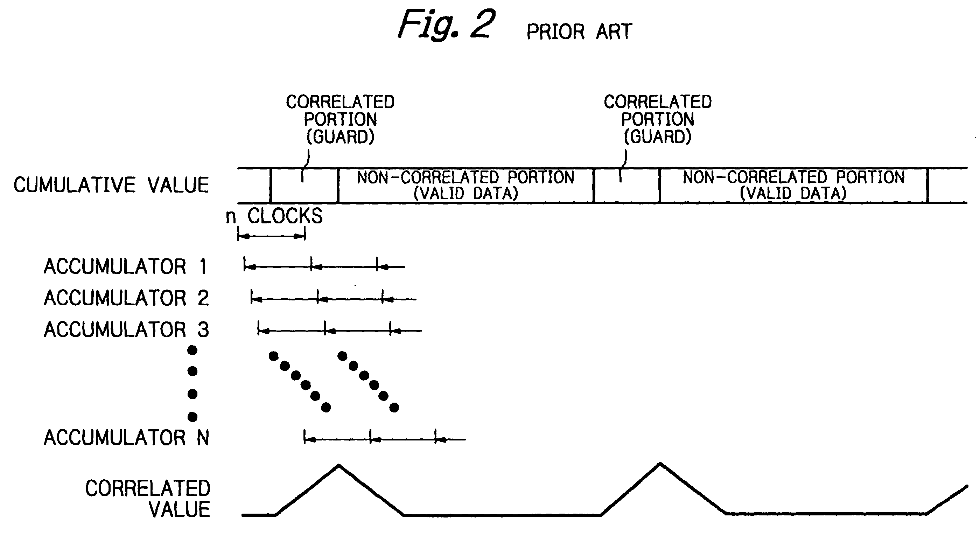

The accumulators 6 through 9 each repeatedly perform calculation during intervals indicated by arrows in FIG. 2 under the control of the timing adjuster 11. At the end of calculation, the selector 10 outputs the result of calculation (correlation value) under the control of the timing adjuster 11.

The above conventional guard interval correlator has the problems discussed earlier.

Briefly, a guard interval correlator of the present invention delays an input value by the length of a guard interval, performs subtraction with the delayed input value and a correlation output delayed by one clock, adds the input value and the result of subtraction, and delays the resulting sum by one clock to thereby produce a correlation output.

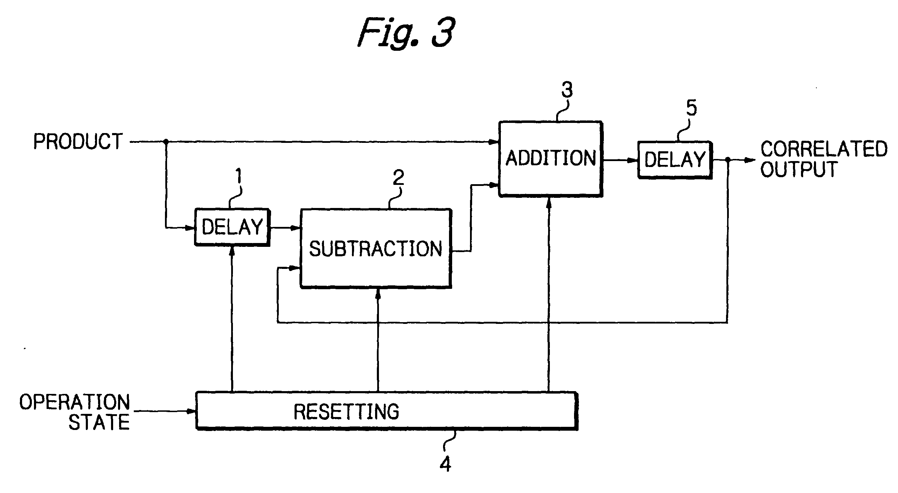

Referring to FIG. 3, a guard interval correlator embodying the present invention is shown. As shown, the correlator includes a delay or first delay means 1, a subtraction 2, an addition 3, a resetting 4, and a delay or second delay means 5. The delay 1 delays an input value (product) by the length of a guard interval. The subtraction 2 subtracts the output of the delay 1 from a correlation value output from the delay 5. The addition 3 adds the product input thereto and the output of the subtraction 2. The resetting 4 resets the delay 1, subtraction 2, and addition 3. The delay 5 delays the output of the addition 3 by one clock.

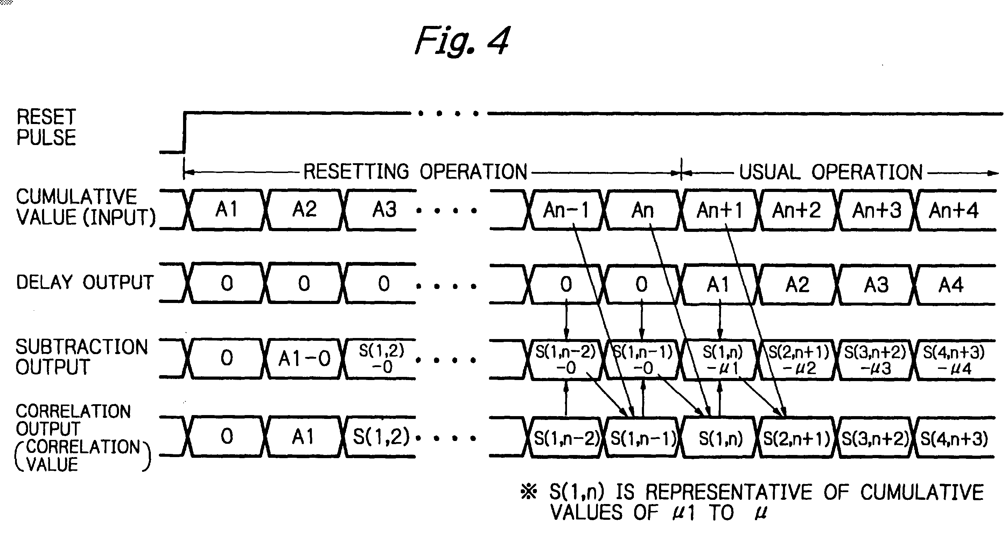

A specific operation of the illustrative embodiment will be described with reference to FIG. 4. First, at the beginning of operation or when the length of a guard interval or similar operating condition varies, it is necessary to reset the entire circuitry. For this purpose, the resetting 4 monitors the statuses of the resetting 4, delay 1, subtraction 2 and addition 3 and generates a reset pulse when any one of them varies.

Specifically, all of the delay 1, subtraction 2 and addition 3 are reset to "0" by the reset pulse output form the resetting 4 (RESETTING OPERATION, FIG. 4). Assume that data (product) A1 is input just after the resetting, that data A2, A3 and so forth follow the data A1, and that a guard interval has a length $n$. Then, the delay 1 delays the data by $n$ clocks, i.e., outputs "0" over the duration of $n$ clocks and outputs the data A1 after the "n+1" clock. Just after the input of the reset pulse, the output of the delay 1 to the subtraction 2 and the output of the delay 5 both are "0", so that the output of the subtraction 2 is also "0".

In the above condition, the input data A1 appears on the output terminal of the addition 3. The delay 5 delays this data A1 by one clock to thereby output a correlation. One clock later than the reset pulse, the data A1 and "0" are input to the subtraction 2. The subtraction 2 subtracts "0" from the data A1 and therefore outputs the data A1. The data A1 output form the subtraction 2 and the data A2 input one clock later than the data A1 are input to the addition 3. The addition 3 produces (A1 + A2) and feeds it to the delay 5. The delay 5 delays the sum output from the addition 3 by one clock to thereby produce a correlation. Assume that the correlation output form the delay 5 is S(1,2). The above procedure is repeated $n$ consecutive times to produce S(1,n).

After the resetting operation, the correlator operates in a usual mode (USUAL OPERATION, FIG. 4). During usual operation, $n$ (guard interval length) newest cumulative values are needed. At the time when the above resetting operation ends, $n$ newest cumulative values (correlation values) have been obtained. After the input of the "n+1" clock, the delay 1 outputs A1 with the result that the subtraction 2 calculates S(1,n) - A1. The addition 3 adds An + 1 to the resulting output of the subtraction 2 and thereby produces S(1,n) - A1 + (An + 1) which is equal to S(2, n+1). This procedure is repeated to produce $n$ newest cumulative values at all times.

As stated above, in the illustrative embodiment, the delay 1 delays an input value by the length of a guard interval while the subtraction 2 subtracts a correlation delayed by one clock from a delayed output. The addition 3 adds the input value and the delayed output. Further, the delay 5 delays the resulting sum by one clock to thereby output a correlation. This is successful to prevent the circuitry from being scaled up without degrading the accuracy of the correlation.

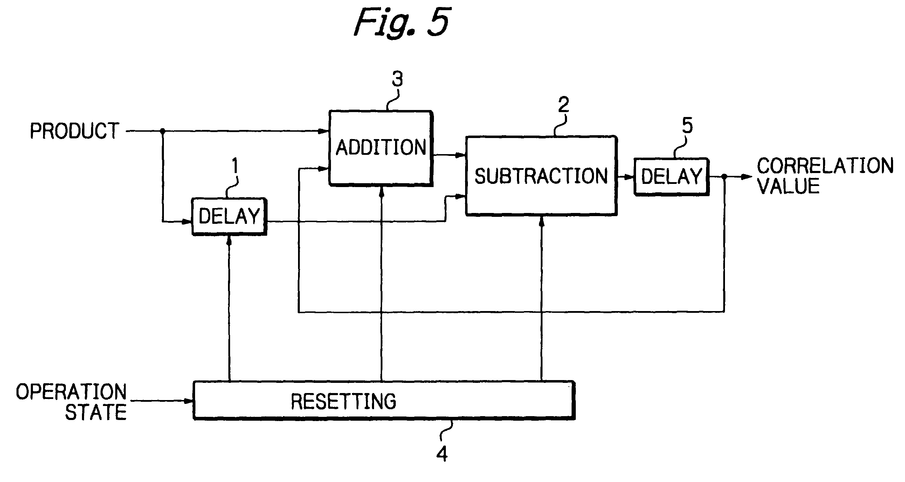

FIG. 5 shows an alternative embodiment of the present invention. As shown, the subtraction 2 is connected to the outside side of the addition 3 in order to perform subtraction with the output of the addition 3 and that of the delay 1. With this configuration, the alternative embodiment achieves the same advantage as the previous embodiment.

In summary, it will be seen that the present invention provides a guard interval correlator capable of insuring accurate correlations with a minimum of circuit scale, and a correlation producing method therefore.

Various modifications will become possible for those skilled in the art after receiving the teachings of the present disclosure without departing from the scope thereof.

**Claims**

1. A guard interval correlator comprising:

   first delay means for delaying an input value by a length of a guard interval ;
   subtracting means for performing subtraction with an output of said first delay means and a correlation output delayed by one clock ;
   adding means for adding the input value and an output of said subtracting means ; and
   second delay means for delaying an output of said adding means by one clock to thereby output the correlation output, and feeding said correlation output to said subtracting means.

2. A correlator as claimed in claim 1, wherein said adding means adds the input value and the output of said second delay means while said subtracting means performs subtraction with the output of said first delay means and the output of said adding means and feeds a result of the subtraction to said second delay means.

3. A correlator as claimed in claim 2, further comprising resetting means for monitoring operations of said first delay means, said subtracting means and said adding means, said resetting means outputting a reset pulse when any one of said operation varies.

4. A correlator as claimed in claim 3, wherein said resetting means feeds the reset pulse to said first delay means, said subtracting means and said adding means at a beginning of operation of said correlator.

5. A correlator as claimed in claim 3, wherein said resetting means outputs the reset pulse when the length of the guard interval varies.

6. A correlator as claimed in claim 1, further comprising resetting means for monitoring operations of said first delay means, said subtracting means and said adding means, said resetting means outputting a reset pulse when any one of said operation varies.

7. A correlator as claimed in claim 6, wherein said resetting means feeds the reset pulse to said first delay means, said subtracting means and said adding means at a beginning of operation of said correlator.

8. A correlator as claimed in claim 6, wherein said resetting means outputs the reset pulse when the length of the guard interval varies.

9. A method of producing a guard interval correlation, comprising the steps of:

(a) delaying an input value by a length of a guard interval to thereby produce a delayed output;
(b) executing subtraction with the delayed output and a correlation output delayed by one clock to thereby produce a difference;
(c) adding the input value and the difference to thereby produce a sum; and
(d) delaying the sum by one clock to thereby produce the correlation output and feeding said correlation output to step (b).

10. A method as claimed in claim 9, wherein step (c) includes (e) adding the input value and the correlation output delayed by one clock, and step (b) includes (f) executing subtraction with a sum output by (e) and the delayed output by (a).

11. A method as claimed in claim 10, wherein steps (a) through (c) and step (f) each include step (g) monitoring the step and generating a reset pulse when said step varies.

12. A method as claimed in claim 11, where in step (g) includes (h) resetting a procedure of steps (a) through (c) or a procedure of steps (e) and (f) with the reset pulse.

13. A method as claimed in claim 11, wherein step (g) includes (h) generating the reset pulse when the length of a guard interval varies.

14. A method as claimed in claim 9, wherein steps (a) through (c) and step (f) each include (g) monitoring the step and generating a reset pulse when said step varies.

15. A method as claimed in claim 14, wherein step (g) includes (h) resetting a procedure of steps (a) through (c) or a procedure of steps (e) and (f) with the reset pulse.

16. A method as claimed in claim 14, wherein step (g) includes (h) generating the reset pulse when the length of a guard interval varies.

*Fig. 1*   PRIOR ART

PRODUCT

6 — ACCUMULATOR 1

7 — ACCUMULATOR 2

8 — ACCUMULATOR 3

9 — ACCUMULATOR N

SELECTOR ~10

CORRELATION OUTPUT

TIMING ADJUSTER ~11

EP 1 018 828 A2

## *Fig. 2*   PRIOR ART

CORRELATED
PORTION
(GUARD)

CORRELATED
PORTION
(GUARD)

| CUMULATIVE VALUE | | | NON-CORRELATED PORTION (VALID DATA) | | NON-CORRELATED PORTION (VALID DATA) | |

n CLOCKS

ACCUMULATOR 1

ACCUMULATOR 2

ACCUMULATOR 3

ACCUMULATOR N

CORRELATED
VALUE

EP 1 018 828 A2

# Fig. 3

PRODUCT

DELAY — 1

SUBTRACTION — 2

ADDITION — 3

DELAY — 5

CORRELATED OUTPUT

RESETTING — 4

OPERATION STATE

## Fig. 4

RESET PULSE

|←————— RESETTING OPERATION ——————————|———— USUAL OPERATION ————→

| CUMULATIVE VALUE (INPUT) | A1 | A2 | A3 · · · · | An−1 | An | An+1 | An+2 | An+3 | An+4 |
|---|---|---|---|---|---|---|---|---|---|
| DELAY OUTPUT | 0 | 0 | 0 · · · · | 0 | 0 | A1 | A2 | A3 | A4 |
| SUBTRACTION OUTPUT | 0 | A1−0 | S(1,2) −0 · · · · | S(1,n−2) −0 | S(1,n−1) −0 | S(1,n) −$\mu$1 | S(2,n+1) −$\mu$2 | S(3,n+2) −$\mu$3 | S(4,n+3) −$\mu$4 |
| CORRELATION OUTPUT (CORRELATION VALUE) | 0 | A1 | S(1,2) · · · · | S(1,n−2) | S(1,n−1) | S(1,n) | S(2,n+1) | S(3,n+2) | S(4,n+3) |

※ S(1,n) IS REPRESENTATIVE OF CUMULATIVE VALUES OF $\mu$1 TO $\mu$

EP 1 018 828 A2

# Fig. 5

EP 1 018 828 A2